# EUROPÄISCHE PATENTSCHRIFT

(11) **EP 2 093 451 B1**
(45) Veröffentlichungstag und Bekanntmachung des Hinweises auf die Patenterteilung: **27.01.2010**
(21) Anmeldenummer: 09152242.5
(22) Anmeldetag: 06.02.2009
(51) Int. Cl.: F16D 65/18, F16D 55/226

(54) **Bremskraft-Übertragungsanordnung**
Brake power transfer assembly
Agencement de transmission de force de freinage

(30) Priorität: 21.02.2008 DE 102008010462
(43) Veröffentlichungstag der Anmeldung: 26.08.2009
(73) Patentinhaber: BPW Bergische Achsen KG, 51674 Wiehl (DE)
(72) Erfinder: Prinz, Christian, 53111 Bonn (DE); Klaas, Thomas, 51580 Reichshof (DE)
(74) Vertreter: Christophersen, Ulrich Rudolf

(56) Entgegenhaltungen:
- EP-A- 1 441 142
- WO-A-97/01044
- DE-A1-102005 035 583

## Beschreibung

Die Erfindung betrifft eine Bremskraft-Übertragungsanordnung, mit einem unverdrehbar in einem Bremsgehäuse beweglichen, ein zylindrisches Loch aufweisenden ersten Druckelement, einem mit einem zylindrischen Längsabschnitt in dem Loch sitzenden und gegen das erste Druckelement abgestützten zweiten Druckelement, und einem zwischen den Druckelementen angeordneten, einem Herausziehen des zweiten aus dem ersten Druckelement Widerstand entgegensetzenden Koppelring.

Eine derartige Bremskraft-Übertragungsanordnung mit zwei im Übertragungsweg der Bremskraft hintereinander angeordneten Druckelementen ist aus der DE 10 2005 035 583 A1 bekannt. Bei dem ersten Druckelement handelt es sich um eine senkrecht zur Bremsscheibenebene in dem Bremsgehäuse geführte Traverse. Diese ist als symmetrisches Joch gestaltet, welches an beiden Enden mit jeweils einem Sackloch versehen ist. Darin stützt sich jeweils ein das zweite Druckelement darstellender, zylindrischer Druckstempel ab, welcher bei der Zuspannung, d. h. Betätigung der Bremse, mit seinem radial erweiterten anderen Ende gegen den Bremsbelag der Bremse arbeitet. Um einen Eintritt von Staub und Schmutz in den Bereich der Traverse und dort vorhandener Nachstelleinrichtungen zu verhindern, kann sich zwischen dem Druckstempel und dem Bremsgehäuse eine stark dehn-und kontraktionsfähige Faltenbalgdichtung befinden.

Damit es beim Lösen der Bremse, d. h. beim Zurückbewegen der Traverse, zugleich auch zu einem Zurückziehen der Druckstempel kommt, sind diese jeweils formschlüssig in dem Sackloch der Traverse befestigt, wobei als Verbindungselement ein Koppelring dient. Die mit dem Koppelring erzielte Längsverbindung ist so fest, dass sich, etwa bei Montagearbeiten an der Bremse, der Druckstempel nur mit erheblicher Kraftaufwendung aus der Traverse herausziehen lässt. Leider besteht ein Nebeneffekt dieser Verbindung darin, dass sich der Druckstempel bei ausreichendem Kraftaufwand in dem Sackloch zu drehen vermag. Versuche haben gezeigt, dass es bei der Zuspannung der Bremse, verursacht etwa durch ein leicht verkantetes Anliegen des Druckstempels an dem Bremsbelag, zu einer solchen Drehung des Druckstempels relativ zu der drehfest angeordneten Traverse kommt. Der einzelne Drehwinkel ist zwar extrem klein, jedoch kann es über eine längere Betriebsdauer der Bremse zu einer Aufsummierung kommen. Das Verdrehen des Druckstempels ist für den Druckstempel selbst unproblematisch, zumal dieser ohnehin zylindrisch, d. h. achssymmetrisch gestaltet ist. Jedoch führt das Verdrehen des Druckstempels zu einem entsprechenden Verdrehen auch der Faltenbalgdichtung. Derartige Dichtungen aber reagieren empfindlich auf ein zueinander Verdrillen ihrer Enden, da hierdurch die Fähigkeit zum Zusammenfalten stark beeinträchtigt wird. Die Dichtung wird übermäßig beansprucht mit der Folge sich bald einstellender Risse.

Ziel der Erfindung ist es daher, bei einer Bremskraft-Übertragungsanordnung der eingangs angegebenen Art diese Nachteile zu vermeiden.

Zur Lösung wird bei einer Bremskraft-Übertragungsanordnung der eingangs angegebenen Art vorgeschlagen, dass der Koppelring gegenüber dem ersten und / oder dem zweiten Druckelement formschlussfrei und reibungsarm derart angeordnet ist, dass das zweite Druckelement um seine Längsachse drehbar zu dem ersten Druckelement ist.

Erfindungsgemäß sitzt daher das zweite Druckelement nicht "stramm" in dem ersten Druckelement, sondern in Drehrichtung formschlussfrei und reibungsarm, wodurch das zweite Druckelement um seine Längsachse drehbar ist. Kommt es daher bei der Zuspannung der Bremse, etwa infolge von Asymmetrien der Druckübertragung, zu einem Verdrehen des zweiten Druckelements relativ zum ersten, unverdrehbaren Druckelement, so ist dieser Vorgang spätestens beim Lösen der Bremse wieder reversibel, da das zweite Druckelement, etwa infolge der Rückstellkraft einer sich elastisch verhaltenden Dichtung, wieder seine ursprüngliche Drehlage einnimmt. Auch bei langer Betriebsdauer der Bremse kommt es daher nicht zu einem zunehmenden Verdrehen, verbunden mit einem Verdrillen und Überbeanspruchen einer zwischen dem zweiten Druckelement und dem Bremsgehäuse angeordneten Dichtung.

Mit einer Ausgestaltung der Bremskraft-Übertragungsanordnung wird vorgeschlagen, dass zur Aufnahme des Koppelrings die Druckelemente jeweils mit einer Ringnut oder einer ringförmigen Aussparung versehen sind, dass zumindest die eine der beiden Ringnuten einen Nutquerschnitt mit einem Nutboden aufweist, dass sich der Koppelring auf mindestens zwei unterschiedlichen Längsabschnitten gegen den Nutboden abstützt, und dass mindestens ein radial federnder Bereich des Koppelrings in die andere Ringnut hineinragt.

Vorzugsweise ragt der radial federnde Bereich in die andere Ringnut hinein, ohne deren Boden zu berühren. Ebenfalls von Vorteil ist, wenn der radial federnde Bereich in die andere Ringnut derart hineinragt, dass er nur an einer Kante dieser Ringnut anliegt und so eine Axialkraft erzeugt, welche die Druckelemente zusammenführt.

Mit dem Ziel einer kostengünstigen Herstellung des Koppelrings wird vorgeschlagen, dass dieser aus einem zu einem Ring geformten Blechstreifen besteht, wobei die radial federnden Bereiche Laschen im Material des Blechstreifens sind.

Weitere Einzelheiten und Vorteile ergeben sich aus der nachfolgenden Beschreibung eines auf der Zeichnung dargestellten Ausführungsbeispiels. Im Einzelnen zeigen:
- Fig. 1: eine stark vereinfachte Schnittdarstellung durch eine Fahrzeug-Scheibenbremse;
- Fig. 2: einige Bauteile der Fahrzeug-Scheibenbremse nach Fig. 1, wobei diese Bauteile zur Hälfte in einer Ansicht, und zur Hälfte im Schnitt dargestellt sind;
- Fig. 3: das Detail III nach Fig. 2 in vergrößerter Darstellung;
- Fig. 4: eine gegenüber der Fig. 3 nochmals vergrößerte Detaildarstellung;

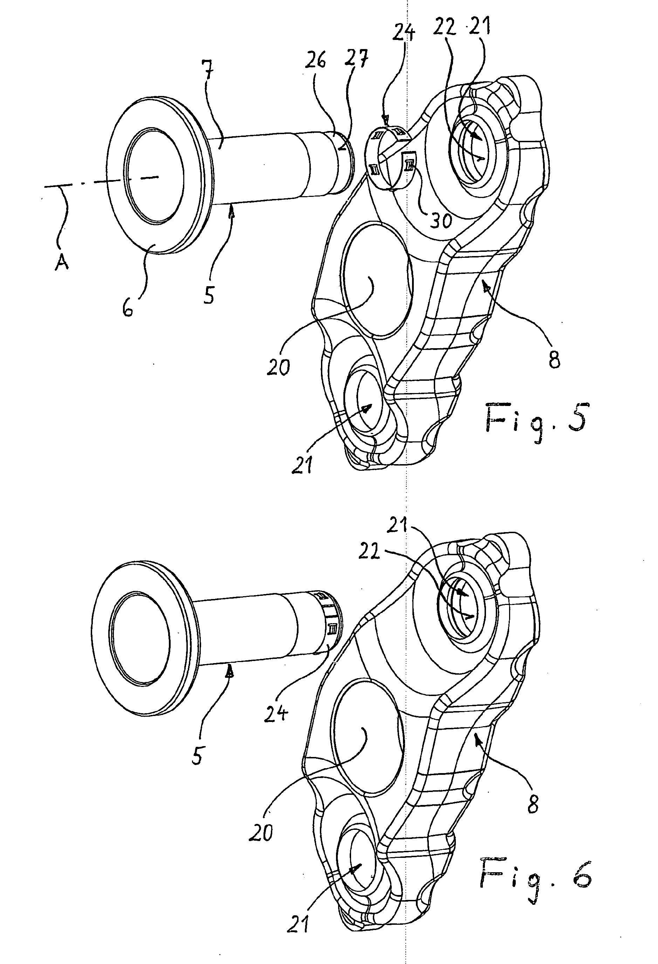

- Fig. 5: einige der Bauteile nach Fig. 2 in perspektivischer Explosionsdarstellung;
- Fig. 6: in einer der Fig. 5 entsprechenden Darstellung dieselben Bauteile, jedoch bei auf den Druckstempel aufgesetztem Koppelring und
- Fig. 7: in einer Ansicht eine alternative Gestaltung des Koppelrings.

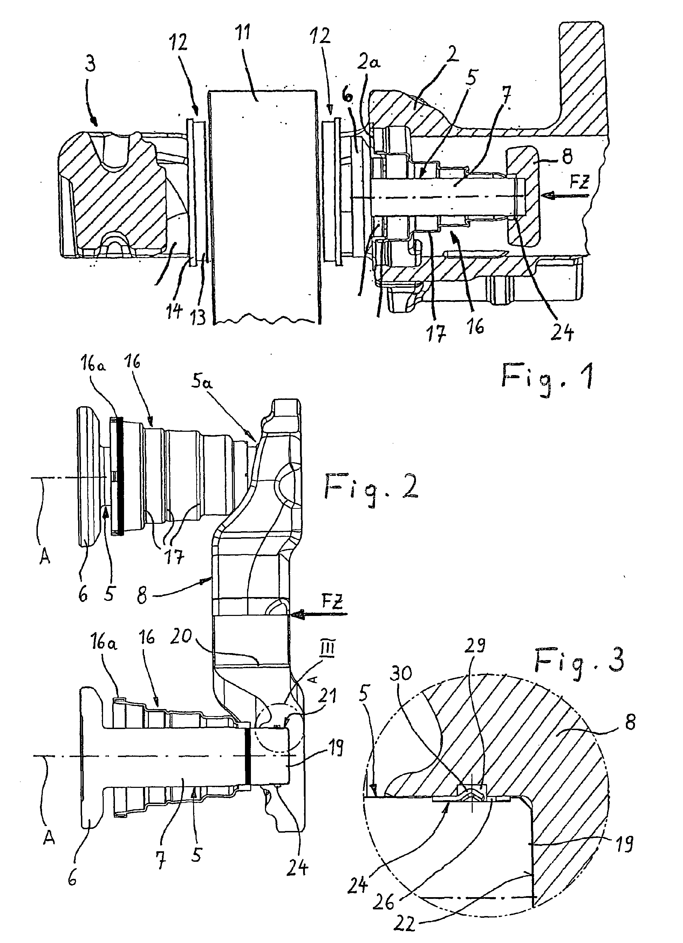

Die Fig. 1 zeigt schematisch eine Scheibenbremse für ein Fahrzeug, insbesondere für ein Schwerlast-Fahrzeug. Die Scheibenbremse, welche druckluftbetätigt sein kann, besteht aus einem Bremssattel 1, welcher als Festsattel oder als Schwimmsattel gestaltet sein kann, sowie einer Bremsscheibe 11, zu deren beiden Seiten Bremsbeläge 12 im Bremsgehäuse oder im Bremssattel angeordnet sind. Diese bestehen jeweils aus einem Reibbelag 13 sowie einer rückseitigen Belagträgerplatte 14. Der Bremssattel 1 besteht aus einer das obere Ende der Bremsscheibe 11 U-förmig umgreifenden Bremssattelbrücke 3, sowie einem Bremsgehäuse 2.

Gemäß Fig. 2 sind im Inneren des Bremsgehäuses zwei Druckstempel 5 untergebracht, welche sich jeweils aus einem Schaft 7 und einem sich an den Schaft 7 anschließenden, radial vergrößerten Druckteller 6 zusammensetzen. Schaft 7 und Druckteller 6 sind vorzugsweise einstückig. Mit ihren rückwärtigen Längsabschnitten sitzen die Druckstempel 5 in einer Traverse 8, welche nach Art eines Jochs die beiden Druckstempel 5 miteinander verbindet. Eine auf der Zeichnung nicht dargestellte Zuspanneinrichtung erzeugt eine zentrale Zuspannkraft FZ auf die Traverse 8, woraufhin diese die Druckkraft zu gleichen Teilen auf die beiden Druckstempel 5 verteilt.

Eine Dichtung 16 umgibt den Schaft jedes Druckstempels 5. Bei der Dichtung 16 handelt es sich um einen Faltenbalg, welcher sich in den Faltungszonen 17 durch radiale Schichtung von Dichtungsabschnitten zu falten vermag. Bei axialer Stauchung der Dichtung 16 kommt es zu einer Verformung der Dichtung dergestalt, dass sich die durch die einzelnen Faltungszonen 17 gebildeten Lagen radial übereinander legen. Auf diese Weise baut die Dichtung 16 in gestauchtem Zustand sehr kompakt.

Bei der Zuspannung der Scheibenbremse treibt die zentral mit der Kraft FZ beaufschlagte Traverse 8 die Druckstempel 5 in Richtung zu der Bremsscheibe 11 (Fig. 1) hin axial aus dem Bremsgehäuse 2 hinaus, wodurch der an den Drucktellern 6 der Druckstempel 5 anliegende Bremsbelag 12 gegen die mit dem Fahrzeugrad umlaufende Bremsscheibe 11 gepresst wird.

Bei der praktischen Auslegung der Fahrzeugbremse hängt die Stellung der Druckstempel 5 innerhalb des Bremsgehäuses 2 wesentlich vom Verschleiß der Bremsbeläge ab. Mit steigendem Verschleiß der Bremsbeläge wird die Traverse 8 über eine zentral innerhalb der Traverse 8 angeordnete Nachstelleinrichtung in Richtung zu der Bremsscheibe 11 nachgestellt, so dass die Druckstempel 5 mit der Zeit immer weiter aus dem Bremsgehäuse 2 austreten. Derartige Nachstelleinrichtungen sind aus dem Stand der Technik vielfältig bekannt, und bedürfen daher hier keiner näheren Erläuterung.

Zur Bremsscheibe 11 hin ist das Bremsgehäuse 2 durch eine Verschlussplatte 2a, die Bestandteil des Bremsgehäuses ist, abgeschlossen. Ein Eindringen von Staub oder Feuchte in das Innere des Bremsgehäuses 2 wird durch die bereits beschriebenen Dichtungen 16 verhindert. Zu diesem Zweck ist jede Dichtung mit einem inneren Befestigungsbereich am Schaft des Druckstempels 5, und mit einem äußeren Befestigungsbereich am Bremsgehäuse 2, vorzugsweise an dessen Verschlussplatte 2a, festgelegt.

Die Fig. 2 zeigt zur Hälfte einen Längsschnitt durch die Traverse 8 sowie einen der beiden Druckstempel 5. Der andere Druckstempel ist bei 5a in die Traverse 8 eingesetzt. Die nach Art eines Jochs gestaltete Traverse 8 ist zentral mit einem Gewinde 20 versehen, in welchem die Nachstelleinrichtung sitzt. Mit gleichen Abständen an beiden Enden der Traverse 8 ist diese mit jeweils einem Loch 21 versehen, in welchem ein zylindrisch gestalteter Endabschnitt des jeweiligen Druckstempels 5 sitzt. Hierbei stützt sich das rückwärtige Ende 19 des Druckstempels 5 gegen einen Boden 22 des Lochs 21 ab, welches daher als Sackloch ausgebildet ist.

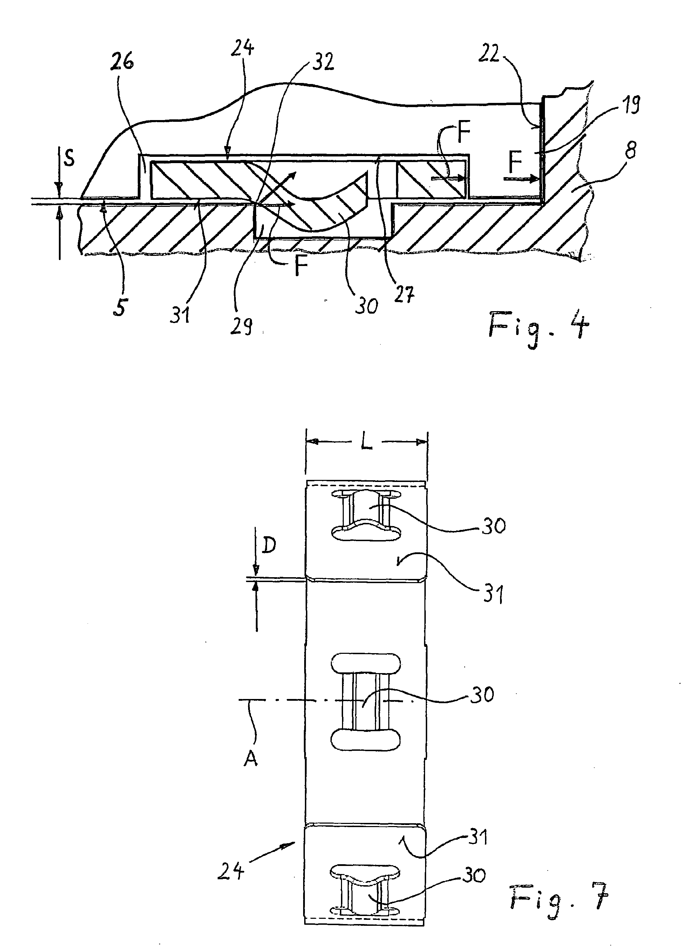

Im Rahmen der Erfindung stellt die in dem Bremsgehäuse 2 geführte Traverse ein erstes Druckelement 8 dar, welches die Bremskraft zu gleichen Teilen auf den ersten und den zweiten Druckstempel überträgt, wobei diese Druckstempel im Rahmen der Erfindung jeweils das zweite Druckelement 5 darstellen. Zwischen diesen und der zylindrischen Mantelfläche des jeweiligen Sacklochs 21 besteht ein radiales Spiel S (Fig. 4). Das Spiel S ist so groß, dass der Druckstempel 5 mit seiner Längsachse A kippbeweglich in dem Sackloch 21 gelagert ist, um so die Relativbewegungen des an dem Druckstempel 5 abgestützten Bremsbelags 12 in Umfangsrichtung der Bremsscheibe 11 ausgleichen zu können. Während das erste Druckelement 8, also die Traverse, im wesentlichen unverdrehbar in dem Bremsgehäuse 2 (Fig. 1) geführt ist, sind die beiden zweiten Druckelemente 5 zwar in Längsrichtung mit dem ersten Druckelement 8 gekoppelt, jedoch um ihre eigene Längsachse A in dem Loch bzw. Sackloch 21 des ersten Druckelements 8 frei drehbar. Zur Sicherstellung dieser freien Drehbarkeit sind die zweiten Druckelemente 5 mittels eines reibungsfreien, zumindest sehr reibungsarmen Koppelrings 24 in dem jeweiligen Sackloch 21 axial gesichert. Die Gestaltung dieses Koppelrings 24 sowie dessen Zusammenwirken mit dem ersten Druckelement 8 (Traverse) einerseits und den zweiten Druckelementen 5 (Druckstempel) andererseits wird im Folgenden erläutert.

Gemäß den Fign. 3 und 4 ist das zweite Druckelement 5 auf seinem in das Sackloch 21 hineinragenden, zylindrischen Längsabschnitt mit einer Ringnut 26 versehen. Im Querschnitt betrachtet weist die Ringnut 26 einen ebenen Nutboten 27 auf, und der Nutquerschnitt weist die Gestalt eines lang gestreckten Rechtecks auf. Gegenüberliegend der Ringnut 26 ist auch das erste Druckelement 8, d. h. die Traverse, mit einer Ringnut 29 versehen. Diese ist in die zylindrische Wandung des Sacklochs eingearbeitet. Auch der Nutquerschnitt der Ringnut 29 ist rechteckig, jedoch ist die Ringnut 29, in Richtung der Längsachse A betrachtet, deutlich kürzer, als die Ringnut 26 des Druckelements 5.

Die Fign. 3 und 4 lassen ferner erkennen, dass der flach gestaltete Koppelring 24 flächig auf dem flachen Nutboden 27 der längeren Ringnut 26 des Druckelementes 5 sitzt, und radial nach außen vorstehende Bereiche 30 des Koppelrings 24 in die andere Ringnut, also in die Ringnut 29 des Druckelementes 8, hineinragen. Diese in die andere Ringnut 29 hineinragenden Bereiche 30 können, wie im Folgenden noch im Einzelnen beschrieben wird, radial federnd gestaltet sein.

Hierzu zeigt Fig. 7 den Koppelring 24 in einer stark vergrößerten, perspektivischen Einzeldarstellung. Die Grundstruktur des Koppelrings 24 ist die eines zu einem geschlitzten Ring geformten, flachen Blechstreifens von deutlich größerer axialer Länge L als Dicke D. Insbesondere ist die Dicke D des Blechstreifens maximal gleich der Tiefe der Ringnut 26, in der der Koppelring 24 sitzt. Da er aus einem flachen Blechstreifen besteht, liegt er flächig am ebenen Nutboden 27 der Ringnut 26 an. Insbesondere stützt er sich daher auf mindestens zwei unterschiedlichen Längsabschnitten, und damit lagestabil, gegen den ebenen Nutboden 27 ab (Fig. 4). Gleichmäßig über den Umfang des Koppelrings 24 verteilt ist dieser mit den radial nach außen vorstehenden Bereichen 30 versehen. Gebildet werden diese Bereiche durch Laschen oder Stege im Material des Blechstreifens. Die Laschen oder Stege sind durch Stanzen des Blechstreifens hergestellt und außerdem so verformt, dass sie jeweils sattelförmig aus der Umfangsfläche 31 des Blechstreifens radial vorstehen. Infolge der Gestaltung der Laschen können diese zudem radial federnd sein.

In montiertem Zustand gemäß Fig. 4 ragen diese Bereiche 30 des Koppelrings in die jeweils andere Ringnut hinein, d. h. beim Ausführungsbeispiel in die Ringnut 29 des Druckelements 8. Jedoch berühren die Bereiche 30 nicht den Nutboden der Ringnut 29. Der Koppelring 24 einschließlich seiner radial vorspringenden Bereiche 30 übt eine Axialkraft F auf die Kante 32 der Ringnut 29 des anderen Druckelements 8 aus. Auf diese Weise erlaubt der Koppelring 24 eine formschlussfreie und reibungsarme Drehlagerung des zweiten Druckelements 5 in dem Sackloch 21 des ersten Druckelements 8, wobei gleichzeitig eine gewisse Axialkraft F aufrechterhalten wird, welche die Druckelemente 5, 8 so zusammenführt, dass sich das Ende 19 des Druckelements 5 gegen den Boden 22 des Sacklochs 21 abstützt.

Bei dem hier beschriebenen Ausführungsbeispiel sitzt der aus dem Blechstreifen geformte Koppelring 24 in der Ringnut 26, und ragt mit seinen sattelförmig nach außen vorspringenden Bereichen 30 in die andere Ringnut 29. Umgekehrt lässt sich die Anordnung aber auch so treffen, dass der Koppelring in einer Ringnut des ersten Druckelements 8 sitzt, und mit radial nach innen vorstehenden Bereichen in die Ringnut des zweiten Druckelements hineinragt.

Auch in diesem Fall wird eine in Umfangsrichtung formschlussfreie und reibungsarme Lagerung des zweiten Druckelements 5 in dem Sackloch des ersten Druckelements 8 erzielt.

Auch bei längerer Betriebsdauer der Scheibenbremse kann es daher zu keinem dauerhaften Verdrehen der das zweite Druckelement 5 bildenden Druckstempel relativ zu der Traverse 8, und damit zu einem immer größeren Verdrillen der Dichtung 16 kommen. Vielmehr stabilisiert gerade die Dichtung 16, welche mit ihrem einen Ende 16 a am Gehäuse 2, 2a der Bremse festgelegt ist, infolge der Rückformeigenschaften ihres Dichtungsmaterials die Drehlage des jeweiligen Druckstempels 5, so dass dieser seine Drehlage auf Dauer beibehält.

### Bezugszeichenliste

- 1: Bremssattel
- 2: Bremsgehäuse
- 2a: Verschlussplatte
- 3: Bremssattelbrücke
- 5: zweites Druckelement, Druckstempel
- 5a: Ort
- 6: Druckteller
- 7: Schaft
- 8: erstes Druckelement, Traverse
- 11: Bremsscheibe
- 12: Bremsbelag
- 13: Reibbelag
- 14: Belagträgerplatte
- 16: Dichtung
- 16a: Ende der Dichtung
- 17: Faltungszone
- 19: Ende
- 20: Gewinde
- 21: Loch, Sackloch
- 22: Boden
- 24: Koppelring
- 26: Ringnut
- 27: Nutboden
- 29: Ringnut
- 30: Bereich
- 31: Umfangsfläche
- 32: Kante

- A: Längsachse
- D: Dicke
- F: Kraft
- FZ: Zuspannkraft
- L: Länge
- S: radiales Spiel

## Patentansprüche

1. Bremskraft-Übertragungsanordnung mit einem unverdrehbar in einem Bremsgehäuse (2) beweglichen, ein zylindrisches Loch (21) aufweisenden ersten Druckelement (8), einem mit einem zylindrischen Längsabschnitt in dem Loch (21) sitzenden und gegen das erste Druckelement (8) abgestützten zweiten Druckelement (5), und einem zwischen den Druckelementen (8, 5) angeordneten, einem Herausziehen des zweiten aus dem ersten Druckelement Widerstand entgegensetzenden Koppelring (24),
**dadurch gekennzeichnet,**
**dass** der Koppelring (24) gegenüber dem ersten (8) und/oder dem zweiten (5) Druckelement formschlussfrei und reibungsarm derart angeordnet ist, dass das zweite Druckelement (5) um seine Längsachse (A) drehbar zu dem ersten Druckelement (8) ist.

2. Bremskraft-Übertragungsanordnung nach Anspruch 1, **gekennzeichnet durch** eine in Längsrichtung flexible Dichtung (16) zwischen dem zweiten Druckelement (5) und dem Bremsgehäuse (2).

3. Bremskraft-Übertragungsanordnung nach Anspruch 2, **dadurch gekennzeichnet, dass** die Dichtung (16) mit einem inneren Befestigungsbereich an dem zweiten Druckelement (5) und mit einem äußeren Befestigungsbereich an dem Bremsgehäuse (2) festgelegt ist.

4. Bremskraft-Übertragungsanordnung nach Anspruch 3, **dadurch gekennzeichnet, dass** die Dichtung (16) ein Faltenbalg ist.

5. Bremskraft-Übertragungsanordnung nach Anspruch 4, **dadurch gekennzeichnet, dass** die Dichtung (16) als sich bei axialer Stauchung in mehreren Lagen schichtender Faltenbalg ausgebildet ist, wobei sich die Lagen radial übereinander schichten.

6. Bremskraft-Übertragungsanordnung nach einem der vorangegangenen Ansprüche, **dadurch gekennzeichnet, dass** zur Aufnahme des Koppelrings (24) die Druckelemente (8, 5) jeweils mit einer Ringnut (29, 26) oder einer ringförmigen Aussparung versehen sind, dass zumindest die eine der beiden Ringnuten (26) einen Nutquerschnitt mit einem Nutboden (27) aufweist, dass sich der Koppelring (24) auf mindestens zwei unterschiedlichen Längsabschnitten gegen den Nutboden (27) abstützt, und dass mindestens ein radial federnder Bereich (30) des Koppelrings (24) in die andere Ringnut (29) hineinragt.

7. Bremskraft-Übertragungsanordnung nach Anspruch 6, **dadurch gekennzeichnet, dass** der radial federnde Bereich (30) in die andere Ringnut (29) hineinragt, ohne deren Boden zu berühren.

8. Bremskraft-Übertragungsanordnung nach Anspruch 6 oder 7, **dadurch gekennzeichnet, dass** der radial federnde Bereich (30) in die andere Ringnut (29) derart hineinragt, dass er nur an einer Kante (32) dieser Ringnut (29) anliegt und so eine Axialkraft (F) erzeugt, welche die Druckelemente (5, 8) zusammenführt.

9. Bremskraft-Übertragungsanordnung nach einem der Ansprüche 6 bis 8, **dadurch gekennzeichnet, dass** der Koppelring (24) aus einem zu einem Ring geformten Blechstreifen besteht, wobei die radial federnden Bereiche (30) Laschen oder Stege im Material des Blechstreifens sind.

10. Bremskraft-Übertragungsanordnung nach einem der Ansprüche 6 bis 9, **dadurch gekennzeichnet, dass** die radial federnden Bereiche (30) gleichmäßig über den Umfang des Koppelrings (24) verteilt sind.

## Claims

1. Brake power transfer assembly comprising a first pressure element (8) which is movable non-rotatably in a brake housing (2) and has a cylindrical hole (21), a second pressure element (5) which is seated with a cylindrical longitudinal section in the hole (21) and is supported against the first pressure element (8), and a coupling ring (24) which is arranged between the pressure elements (8, 5) and opposes the pulling of the second pressure element out of the first pressure element, **characterised in that** the coupling ring (24) is arranged without a form fit and with little friction relative to the first (8) and/or second (5) pressure element so that the second pressure element (5) is rotatable about its longitudinal axis (A) relative to the first pressure element (8).

2. Brake power transfer assembly according to claim 1, **characterised by** a seal (16) between the second pressure element (5) and the brake housing (2), said seal being flexible in the longitudinal direction.

3. Brake power transfer assembly according to claim 2, **characterised in that** the seal (16) is attached by an inner attachment region to the second pressure element (5) and by an outer attachment region to the brake housing (2).

4. Brake power transfer assembly according to claim 3, **characterised in that** the seal (16) is a bellows.

5. Brake power transfer assembly according to claim 4, **characterised in that** the seal (16) is designed as a bellows which forms a plurality of layers when subjected to axial compression, wherein the layers are arranged radially one on top of the other.

6. Brake power transfer assembly according to one of the preceding claims, **characterised in that**, in order to accommodate the coupling ring (24), the pressure elements (8, 5) are in each case provided with an annular groove (29, 26) or an annular cutout, **in that** at least one of the two annular grooves (26) has a groove cross-section with a groove bottom (27), **in that** the coupling ring (24) is supported on at least two different longitudinal sections against the groove bottom (27), and **in that** at least one radially flexible region (30) of the coupling ring (24) protrudes into the other annular groove (29).

7. Brake power transfer assembly according to claim 6, **characterised in that** the radially flexible region (30) protrudes into the other annular groove (29), without touching the bottom thereof.

8. Brake power transfer assembly according to claim 6 or 7, **characterised in that** the radially flexible region (30) protrudes into the other annular groove (29) in such a way that it bears only against a rim (32) of this annular groove (29) and thus produces an axial force (F) which brings the pressure elements (5, 8) together.

9. Brake power transfer assembly according to one of claims 6 to 8, **characterised in that** the coupling ring (24) consists of a sheet metal strip which is shaped to form a ring, wherein the radially flexible regions (30) are tabs or webs in the material of the sheet metal strip.

10. Brake power transfer assembly according to one of claims 6 to 9, **characterised in that** the radially flexible regions (30) are distributed uniformly around the circumference of the coupling ring (24).

## Revendications

1. Système de transmission de force de freinage, comportant un premier élément de pression (8), mobile de manière non rotative dans un carter de freins (2) et muni d'un trou (21) cylindrique, un deuxième élément de pression (5), engagé avec un tronçon longitudinal cylindrique dans le trou (21) et en appui contre le premier élément de pression (8), et une bague d'accouplement (24), agencée entre les éléments de pression (8, 5) et opposant une résistance contre l'extraction du deuxième élément de pression hors du premier, **caractérisé en ce que** la bague d'accouplement (24) est disposée sans emboîtement et sans frottement par rapport au premier (8) et/ou au deuxième élément de pression (5), de telle sorte que le deuxième élément de pression (5) est apte à tourner autour de son axe longitudinal (A) par rapport au premier élément de pression (8).

2. Système de transmission de force de freinage selon la revendication 1, **caractérisé par** une garniture d'étanchéité (16) flexible dans la direction longitudinale, entre le deuxième élément de pression (5) et le carter de freins (2).

3. Système de transmission de force de freinage selon la revendication 2, **caractérisé en ce que** la garniture d'étanchéité (16) est fixée avec une zone de fixation intérieure contre le deuxième élément de pression (5) et avec une zone de fixation extérieure contre le carter de freins (2).

4. Système de transmission de force de freinage selon la revendication 3, **caractérisé en ce que** la garniture d'étanchéité (16) est un soufflet à plis.

5. Système de transmission de force de freinage selon la revendication 4, **caractérisé en ce que** la garniture d'étanchéité (16) est réalisée sous la forme d'un soufflet à plis s'empilant en plusieurs couches en cas de déformation sous pression axiale, les couches se superposant radialement.

6. Système de transmission de force de freinage selon l'une quelconque des revendications précédentes, **caractérisé en ce que** les éléments de pression (8, 5) sont munis chacun d'une rainure annulaire (29, 26) ou d'un évidement annulaire pour recevoir la bague d'accouplement (24), **en ce qu'**au moins l'une des deux rainures annulaires (26) comporte une section avec un fond (27), **en ce que** la bague d'accouplement (24) prend appui sur au moins deux tronçons longitudinaux différents contre le fond de rainure (27), et **en ce qu'**au moins une zone (30) radialement flexible de la bague d'accouplement (24) s'engage dans l'autre rainure annulaire (29).

7. Système de transmission de force de freinage selon la revendication 6, **caractérisé en ce que** la zone (30) radialement flexible s'engage dans l'autre rainure annulaire (29) sans toucher le fond de celle-ci.

8. Système de transmission de force de freinage selon la revendication 6 ou 7, **caractérisé en ce que** la zone (30) radialement flexible s'engage dans l'autre rainure annulaire (29) de telle sorte qu'elle est en appui contre un seul bord (32) de ladite rainure annulaire (29) et génère ainsi une force axiale (F) qui rapproche les deux éléments de pression (5, 8).

9. Système de transmission de force de freinage selon l'une quelconque des revendications 6 à 8, **caractérisé en ce que** la bague d'accouplement (24) est réalisée dans une bande métallique formée en bague, les zones (30) radialement flexibles étant des pattes ou barrettes dans le matériau de la bande métallique.

10. Système de transmission de force de freinage selon l'une quelconque des revendications 6 à 9, **caractérisé en ce que** les zones (30) radialement flexibles sont réparties uniformément sur le pourtour de la bague d'accouplement (24).
